## Europäisches Patentamt

## European Patent Office

## Office européen des brevets

(19)

(11) Veröffentlichungsnummer: **0 073 400**
**B1**

(12) **EUROPÄISCHE PATENTSCHRIFT**

(45) Veröffentlichungstag der Patentschrift:
13.02.85

(21) Anmeldenummer: **82107448.1**

(22) Anmeldetag: **16.08.82**

(51) Int. Cl.⁴: **H 04 B 3/36,** H 04 L 25/20,
H 04 L 25/03, H 04 B 3/04

(54) **Regenerator für digitale Signale mit quantisierter Rückkopplung.**

(30) Priorität: **20.08.81 DE 3132972**

(43) Veröffentlichungstag der Anmeldung:
**09.03.83 Patentblatt 83/10**

(45) Bekanntmachung des Hinweises auf die Patenterteilung:
**13.02.85 Patentblatt 85/7**

(84) Benannte Vertragsstaaten:
**AT BE CH DE FR GB IT LI NL SE**

(56) Entgegenhaltungen:
**DE - A - 2 207 275**
**DE - A - 2 916 376**

**IEEE TRANSACTIONS ON COMMUNICATIONS; Vol. COM-28, May 1980, Institut of Electrical and Electronics Engineers, New York TOKUHIRO/KITAMI "An Experimental 800 Mbit/s Four-Level Repeater Compatible with the 60 MHz Analog System", Seiten 764-771**
**IEEE TRANSACTIONS ON COMMUNICATIONS, Vol. COM-27, January 1979, Institut of Electrical and Electronics Engineers, New York BRIAN GIBSON "Equalization Design for a 600 MBd Quantized Feedback PCM Repeater", Seiten 134-142**

(73) Patentinhaber: **Siemens Aktiengesellschaft, Berlin und München Wittelsbacherplatz 2, D-8000 München 2 (DE)**

(72) Erfinder: **Meyer, Fritz, Dr.-Ing., Wifostrasse 5, D-8034 Unterpfaffenhofen (DE)**

**Beschreibung**

Die Erfindung betrifft einen Regenerator für digitale Signale mit quantisierter Rückkopplung zur Wiedergewinnung der bei der Übertragung der digitalen Signale unterdrückten Signalanteile, mit einem Entscheider, der neben einem Amplitudenentscheider auch einen Zeitentscheider enthalten kann und dessen Verstärkungsgrenzfrequenz etwa der höchsten Signalfrequenz entspricht und mit einer Verbindung vom Entscheiderausgang auf eine dem Entscheider im Signalweg vorgeschaltete erste Summierschaltung, insbesondere für mehrstufige digitale Signale.

Bei der Übertragung von digitalen Signalen über größere Entfernungen mittels Koaxialkabeln kommt es durch die in den Zwischengeneratoren enthaltenen Fernspeiseweichen und die Blitzschutzeinrichtungen zu einer Unterdrückung der tiefen Frequenzen der Übertragungssignale. Auch bei der Übertragung digitalen Signale über Lichtwellenleitersysteme erfolgt eine Unterdrückung der tieffrequenten Signalanteile durch die im Empfängerverstärker im Hinblick auf hohe Temperaturstabilität und einfachen Aufbau verwendete Wechselstromkopplung. In allen Fällen ergibt sich eine Hochpaßwirkung, die zu Signalverformungen führt. Derartige Signalformungen und damit auch Übertragungsstörungen können durch die Verwendung sog. gleichstromfreier Codes vermieden werden, dabei ergibt sich aber eine zusätzliche Redundanz im Übertragungssignal und insgesamt ein höherer Aufwand bei der Signalübertragung.

In den Zwischenregeneratoren kommt es im Amplituden- und Zeitentscheider bei der Regenerierung der digitalen Signale auch zum Auftreten der vorher unterdrückten tiefen Frequenzen.

Es ist nun aus IEEE Transactions on Communications, Vol. COM-22, Nr. 1, Jan. 1974, Seiten 1 bis 5 bekannt, mittels einer quantisierten Rückkopplung vom Entscheiderausgang auf den Entscheidereingang die bei der Übertragung unterdrückten tieffrequenten Signalanteile zurückzugewinnen. Dazu wird das regenerierte digitale Signal am Entscheiderausgang abgenommen und über einen Tiefpaß auf den Entscheidereingang zurückgekoppelt. Die Bemessung des Tiefpasses ergibt sich dabei aus seiner Übertragungsfunktion dadurch, daß die Summe aus der Übertragungsfunktion dieses Tiefpasses und des — beispielsweise als Fernspeiseweiche — vorgeschalteten Hochpasses gleich Eins sein muß. Wegen der Toleranzen in der Übertragungsfunktion des Hochpasses aufgrund von Bauelementstreuungen müßte bei einer hochwertigen Kompensation jeder Tiefpaß auf den gerade vorgeschalteten Hochpaß abgestimmt werden. Aus diesem Grunde wird in der vorgenannten Literaturstelle ein weiterer, zusätzlicher Hochpaß mit höherer unterer Grenzfrequenz vor dem Entscheidereingang in den Signalweg eingefügt. Die Übertragungsfunktion dieses Hochpasses bestimmt wesentlich die Übertragungsfunktion der Kettenschaltung beider Hochpässe, wobei insgesamt geringere Toleranzen auftreten und damit der im Rückkopplungsweg angeordnete Tiefpaß leichter abstimmbar ist. Auch bei dieser Anordnung mit zwei Hochpässen ist aber immer noch eine Abstimmung des vorgesehenen Tiefpasses notwendig. Besondere Schwierigkeiten bei der Abstimmung können sich dabei dadurch ergeben, daß der Abstand der Grenzfrequenzen der beiden Hochpässe voneinander nicht ausreichend groß gewählt werden kann, weil beispielsweise die Nutzbandbreite im Hinblick auf den auftretenden Störabstand nicht unnötig eingeengt werden soll. Es ist dann ein Tiefpaß höheren Grades erforderlich, der schwieriger abzugleichen ist.

Auch aus IEEE Transactions on Communications, Vol. COM-27, Nr. 1, Januar 1979, Seiten 134 bis 142, ist die Anwendung der quantisierten Rückkopplung in einem PCM-Regenerator für eine Schrittgeschwindigkeit von 600 MBaud bekannt.

Aus IEEE Transactions on Communications, Vol. COM-28, Nr. 5, Mai 1980, Seiten 764 bis 771, ist ein Regenerator für vierstufige digitale Signale mit einer Bitrate von 800 Mbit/s bekannt, bei dem ebenfalls eine quantisierte Rückkopplung Anwendung findet.

Bei diesen Regeneratoren mit quantisierter Rückkopplung nach dem Stand der Technik werden die im Übertragungssignal aufgetretenen Hochpaßverformungen der Übertragungssignale ebenfalls dadurch beseitigt, daß die im Übertragungskanal unterdrückten tiefen Frequenzen mit Hilfe der Nichtlinearität des verwendeten Amplituden- und Zeitentscheiders aus dem übertragenen Signal wiedererzeugt und über einen abzustimmenden Tiefpaß vom Entscheiderausgang auf den Entscheidereingang rückgekoppelt werden.

Die Aufgabe der Erfindung besteht also darin, einen Regenerator für digitale Signale mit quantisierter Rückkopplung zu schaffen, für dessen Aufbau kein Abgleich eines Tiefpasses erforderlich ist.

Die Aufgabe wird erfindungsgemäß dadurch gelöst, daß an einen Ausgang des Entscheiders der erste Eingang einer zweiten Summierschaltung angeschlossen ist, deren zweiter Eingang an den Ausgang einer Verzögerungsstufe mit einer Verzögerungszeit etwa entsprechend der Signallaufzeit durch den Entscheider und mit einer Phasendrehung von 180° angeschlossen ist und daß der Eingang der Verzögerungsstufe dem Eingang der ersten Summierschaltung für die zu regenerierenden Signal parallelgeschaltet ist. Von besonderem Vorteil bei der erfindungsgemäßen Lösung ist, daß sich gleichzeitig der Aufwand deutlich verringert hat und daß die quantisierte Rückkopplung sich nicht auf die Wiedergewinnung unterdrückter tieffrequenter Signalanteile beschränkt, sondern auch zur Wiedergewinnung eines oberen, bei der Übertragung unterdrückten Frequenzstandes verwendet werden kann.

Im Hinblick auf eine leichte Integrierbarkeit des Rückkopplungsweges zusammen mit den Entscheideranordnungen ist eine Weiterbildung des erfindungsgemäßen Regenerators so ausgebildet, daß als Verzögerungsstufe eine Transistorverstärkerstufe vorgesehen ist, so daß sich die Möglichkeit ergibt diese Verzögerungsstufe sowie erste und zweite Summierschaltung zu einem einzigen Baustein zusammenzufassen, wobei die erste Summierschaltung einen Verstärker mit niedriger Grenzfrequenz für die rückgekoppelten Signale enthält.

Im Patentanspruch 5 ist eine detailliertere Schaltung eines erfindungsgemäßen Regenerators angegeben.

Die Erfindung soll im folgenden anhand der Zeichnung näher erläutert werden. In der Zeichnung zeigt

Fig. 1 das Prinzipschaltbild und

Fig. 2 die detaillierte Schaltung eines erfindungsgemäßen Regenerators mit quantisierter Rückkopplung.

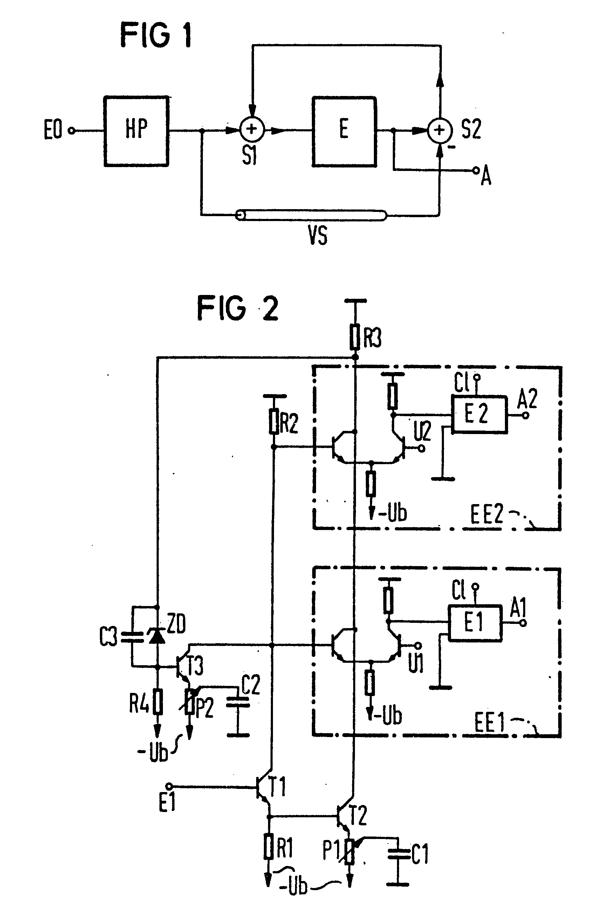

Die in der Fig. 1 dargestellte Prinzipschaltung besitzt einen Eingang E0, an dem die übertragenen digitalen Signale anstehen. An diesen Eingang schließt sich eine Fernspeiseweiche an, die als Hochpaß HP dargestellt ist. Wegen der Abtrennung des Versorgungsgleichstroms werden an dieser Stelle die niedrigen Frequenzanteile des Übertragungssignals unterdrückt, die Übertragungsfunktion des Hochpasses HP ist als F(p) bezeichnet. An den Ausgang des Hochpasses HP ist der eine Eingang einer als Verzögerungsleitung dargestellten Verzögerungsstufe VS angeschlossen. Die Summierschaltung ist ausgangsseitig an den Entscheider E angeschlossen, in dem eine Amplitudenentscheidung und ggf. auch eine Zeitentscheidung erfolgt. Der Entscheider ist dabei in bekannter Weise so aufgebaut, daß seine Verstärkungsgrenzfrequenz etwa der höchsten Signalfrequenz entspricht. Durch die nichtlineare Amplitudenentscheidung werden im Entscheider auch die niedrigen Signalfrequenzen wieder erzeugt. Von einem Ausgang des Entscheiders E, der nicht mit dem Signalausgang für die amplituden- und zeitregenerierten Signale übereinstimmen muß, werden zumindest teilregenerierte Signale abgenommen und einem Eingang einer zweiten Summierstufe S2 zugeführt. Dem anderen Eingang dieser zweiten Summierstufe wird das Ausgangssignal der Verzögerungsstufe VS zugeführt, die Verzögerungsstufe besitzt eine Laufzeit gleich der des Entscheiders E, außerdem wird das verzögerte Signal einer Phasendrehung von 180° unterworfen. In der Summierschaltung S2 kommt es durch die Phasendrehung um 180° zur Differenzbildung zwischen dem Ausgangssignal des Hochpasses HP und dem Ausgangssignal des Entscheiders E, als Differenz erscheinen die im Entscheider E teilweise wiedergewonnenen niederfrequenten Signalanteile entsprechend der Übertragungsfunktion 1 − F(p), die einem zweiten Eingang der ersten Summierschaltung zugeführt werden und dort ggf. nach Verstärkung zum Eingangssignal dieser Summierschaltung addiert werden.

Die auch am Entscheidereingang benötigten tiefen Frequenzanteile des regenerierbaren Signals werden bei der erfindungsgemäßen Regeneratoranordnung also nicht über einen Tiefpaß sondern durch Differenzbildung wiedergewonnen. Durch die Rückkopplung des Differenzsignals zum Entscheidereingang wird diesem immer genau die im vorgeschalteten Übertragungskanal unterdrückten tiefen Frequenzen amplituden- und phasenrichtig zugeführt, wobei das Maß der Unterdrückung der tiefen Frequenzen und durch Bauteiletoleranzen bedingte Streuungen keine wesentliche Rolle mehr spielen. Beim Abgleich der quantisierten Rückkopplung entfällt die Abstimmung des Tiefpaß-Frequenzganges, so daß der Abgleich wesentlich erleichtert ist.

Fig. 2 zeigt einen Regenerator für ternäre digitale Signale, wobei im Vergleich zur Fig. 1 auf die Darstellung des eingangsseitigen Hochpasses HP verzichtet wurde. An den Eingang E1 ist der Basisanschluß eines ersten Transistors T1 angeschlossen, dessen Emitteranschluß mit dem Basisanschluß eines zweiten Transistors T2 sowie über einen ersten Widerstand R1 mit Betriebsspannung −Ub verbunden ist. Der Kollektoranschluß des ersten Transistors T1 ist über einen zweiten Widerstand R2 mit Bezugspotential verbunden. Der Emitteranschluß des zweiten Transistors T2 ist über ein erstes Potentiometer P1 mit Betriebsspannung −Ub verbunden, der Schleifer des Potentiometers P1 ist über einen ersten Kondensator C1 mit Bezugspotential verbunden. Der Kollektoranschluß des Transistors T1 stellt den Ausgang der Summierschaltung S1 dar, mit diesem Kollektoranschluß sind die Eingangsanschlüsse zweier Entscheiderelemente EE1, EE2 verbunden.

Die beiden Entscheiderelemente sind identisch aufgebaut, sie enthalten jeweils einen eingangsseitigen Differenzverstärker und ein ausgangsseitigen getakteten D-Flip-Flop E1 bzw. E2. Die erste Stufe des eingangsseitigen Differenzverstärkers enthält jeweils einen Transistor, dessen Basisanschluß mit dem Eingang des Entscheiderelementes und dessen Kollektoranschluß mit dem Kollektoranschluß des zweiten Transistors T2 über einen dritten Widerstand R3 mit Bezugspotential verbunden ist. Die zweite Stufe des Differenzverstärkers ist über einen gemeinsamen Emitterwiderstand an die erste Stufe angekoppelt, der Basisanschluß der zweiten Stufe ist mit einer Referenzspannung U1 bzw. U2 verbunden, die einer der beiden Schwellen der ternären Signale entspricht. Der Kollektoranschluß des zweiten Transistors T2 ist über eine durch einen dritten Kondensator C3 überbrückte Zenerdiode ZD mit dem Basisanschluß eines dritten Transistors T3 und über einen Widerstand R4 mit Betriebsspannung −Ub verbunden. Der Emitteranschluß des dritten Transistors T3 ist über ein zweites Potentiometer P2 mit Betriebsspannung —Ub und der Mittelabgriff des Potentiometers P2 ist über einen zweiten Kondensator C2 mit Bezugspotential verbunden. Der Kollektoranschluß des dritten Transistors T3 ist an den Kollektoranschluß des ersten Transistors T1 angeschlossen.

Die Eingangsverstärkerstufe mit dem Transistor T1 stellt einen Teil der Summierschaltung S1 und außerdem der Verzögerungsstufe VS dar, die außerdem durch die Verstärkerstufe mit dem Transistor T2 gebildet wird. Durch den Transistor T2 ergibt sich neben der gewünschten Laufzeit auch eine Phasendrehung um 180° die für die Bildung der Differenz in der zweiten Summierschaltung S2 benötigt wird. Zur Verringerung der Laufzeiten werden für die Erzeugung des Rückkopplungssignals nicht die Entscheiderausgangssignale sondern vom Amplitudenvorentscheider abgenommene Signale verwendet. Die zweite Summierschaltung S2 ist also hier durch die Verbindung der Kollektoranschlüsse des Transistors T2 und der Eingangstransistoren der Differenzverstärker in den Entscheiderelementen gebildet. Durch das Potentiometer P1 ist eine Regelung des von der Verzögerungsstufe VS abgegebenen Signals hinsichtlich dessen Amplitude möglich. Durch die Verstärkerstufe mit dem Transistor T3, die zur ersten Summierschaltung S1 gehört, erfolgt eine Verstärkung des rückgekoppelten Differenzsignals auf einen Pegel entsprechend dem der durch die Eingangsverstärkerstufe T1 verstärkten Eingangssignale. Die Verstärkung in der Eingangsverstärkerstufe T1 erfolgt auf eine solche Amplitude, daß die einzelnen Amplitudenstufen einen zur Amplitudenentscheidung in den Entscheiderelementen ausreichenden Abstand voneinander haben. Durch das Potentiometer P2 ist ein zusätzlicher Amplitudenabgleich des rückgekoppelten Signals möglich. Die im Rückkopplungsweg dem Transistor T3 vorgeschaltete kapazitiv überbrückte Zenerdiode dient zum Ausgleich zwischen dem Potential am Basisanschluß des Transistors T3 und an den Kollektoranschlüssen des Transistors T2 bzw. der Eingangstransistoren der Entscheiderelemente.

**Patentansprüche**

1. Regenerator für digitale Signale mit quantisierter Rückkopplung zur Wiedergewinnung der bei der Übertragung der digitalen Signale unterdrückten Signalanteile, mit einem Entscheider (E), der neben einem Amplitudenentscheider auch einen Zeitentscheider enthalten kann und dessen Verstärkungsgrenzfrequenz etwa der höchsten Signalfrequenz entspricht und mit einer Verbindung vom Entscheiderausgang auf eine dem Entscheider im Signalweg vorgeschaltete erste Summierschaltung (S1), insbesondere für mehrstufige digitale Signale, dadurch gekennzeichnet, daß an einen Ausgang des Entscheiders (E) der erste Eingang einer zweiten Summierschaltung (S2) angeschlossen ist, deren zweiter Eingang an den Ausgang einer Verzögerungsstufe (VS) mit einer Verzögerungszeit etwa entsprechend der Signallaufzeit durch den Entscheider (E) und mit einer Phasendrehung von 180° angeschlossen ist und daß der Eingang der Verzögerungsstufe (VS) dem Eingang der ersten Summierschaltung (S1) für die zu regenerierenden Signale parallel geschaltet ist.

2. Regenerator nach Anspruch 1, dadurch gekennzeichnet, daß als Verzögerungsstufe eine Transistorverstärkerstufe vorgesehen ist.

3. Regenerator nach Anspruch 1 oder 2, dadurch gekennzeichnet, daß für die Wiedergewinnung tieffrequenter Signalanteile die erste Summierschaltung (S1) einen Verstärker mit niedriger Grenzfrequenz enthält, der in den Signalweg für die rückgekoppelten Signale eingeschaltet ist.

4. Regenerator nach den Ansprüchen 1 bis 3, dadurch gekennzeichnet, daß die Verzögerungsstufe (VS) sowie die erste und zweite Summierschaltung (S1, S2) zu einem einzigen Baustein zusammengefaßt sind.

5. Regenerator nach den Ansprüchen 1 bis 4, dadurch gekennzeichnet, daß für die Wiedergewinnung tieffrequenter Signalanteile eines n-stufigen digitalen Signals mit einem Eingangsanschluß (E1) der Basisanschluß eines ersten Transistors (T1) verbunden ist, dessen Emitteranschluß mit dem Basisanschluß eines zweiten Transistors T2 und über einen ersten Widerstand (R1) mit Betriebsspannung —Ub verbunden ist, daß der Emitteranschluß des zweiten Transistors (T2) über ein erstes Potentiometer (P1) mit Betriebsspannung (—Ub) verbunden ist und dabei der Schleiferanschluß des Potentiometers (P1) über einen ersten Kondensator (C1) mit Bezugspotential verbunden ist, daß eine gegenüber der Anzahl n der Amplitudenstufen um 1 verringerte Anzahl an Entscheiderelementen (EE1, EE2) vorgesehen ist, daß die Entscheiderelemente jeweils einen eingangsseitigen Differenzverstärker mit nachgeschaltetem getaktetem D-Flip-Flop enthalten und dabei die Referenzspannung bzw. die Schaltschwelle des getakteten D-Flip-Flops einer der Schwellen des zu regenerierenden digitalen Signals entsprechen, daß der Kollektoranschluß des zweiten Transistors (T2) und die Kollektoranschlüsse der Eingangsstufen der Differenzverstärker der Entscheiderelemente miteinander, über eine durch einen dritten Kondensator (C3) überbrückte Zenerdiode (ZD) mit dem Basisanschluß eines dritten Transistors (T3) sowie über einen dritten Widerstand (R3) mit Bezugspotential verbunden sind, daß der Basisanschluß des dritten Transistors (T3) über einen vierten Widerstand (R4) und der Emitteranschluß dieses Transistors über ein zweites Potentiometer (P2) mit Betriebsspannung (—Ub) verbunden sind, daß der Mittelabgriff des zweiten Potentiometers (P2) über einen zweiten Kondensator (C2) mit Bezugspotential verbunden ist und daß der Kollektoranschluß des dritten Transistors (T3) mit dem Kollektoranschluß des ersten Transistors (T1), mit den Eingangsanschlüssen der Entscheiderelemente (EE1, EE2) und über einen zweiten Widerstand (R2) mit Bezugspotential verbunden ist.

## Claims

1. A regenerator for digital signals with quantized feedback to restore signal components which are suppressed in the transmission of the digital signals, with a decision device (E) which can contain a time decision device in addition to an amplitude decision device, and whose amplification cut-off frequency corresponds approximately to the highest signal frequency, and with a connection from the decision device output to a first adder circuit (S1) which precedes the decision device in the signal path, in particular for multi-stage digital signals, characterised in that the output of the decision device (E) is connected to the first input of a second adder circuit (S2) whose second input is connected to the output of a delay stage (VS) with a delay time which corresponds approximately to the signal transit time through the decision device (E), and with a phase rotation of 180°, and that the input of the delay stage (VS) is connected in parallel with the input of the first adder circuit (S1) for the signals which are to be regenerated.

2. A regenerator as claimed in claim 1, characterised in that the delay stage is a transistor amplifier stage.

3. A regenerator as claimed in claim 1 or 2, characterised in that to enable low-frequency signal components to be restored, the first adder circuit (S1) contains an amplifier having a low cut-off frequency connected into the signal path for the fed-back signals.

4. A regenerator as claimed in claims 1 to 3, characterised in that the delay stage (VS), and the first and second adder circuits (S1, S2) are combined to form one single module.

5. A regenerator as claimed in claims 1 to 4, characterised in that to enable restoration of low-frequency signal components of an n-stage digital signal, an input terminal (E1) is connected to the base electrode of a first transistor (T1) whose emitter electrode is connected to the base electrode of a second transistor (T2) and via a first resistor (R1) to the operating voltage (−Ub), that the emitter electrode of the second transistor (T2) is connected via a first potentiometer (P1) to operating voltage (−Ub) and the slider terminal of the potentiometer (P1) is connected to reference potential via a first capacitor (C1), that a number of decision device elements (EE1, EE2) are provided which are one less than the number n of amplitude stages, that the decision device elements each contain an input-end differential amplifier followed by a clock-pulse-controlled D-type flip-flop and the reference voltage and switching threshold of the clock-pulse-controlled D-type flip-flop correspond to one of the thresholds of the digital signal which ist to be regenerated, that the collector electrode of the second transistor (T2) and the collector electrodes of the input stages of the differential amplifiers of the decision device elements are connected to one another, are connected to the base elektrode of a third transistor (T3) via a Zener diode (ZD) bridged by a third capacitor (C3), and are connected via a third resistor (R3) to reference potential, that the base electrode of the third transistor (T3) is connected via a fourth resistor (R4) to the operating voltage (−Ub), to which the emitter electrode of this transistor is connected via a second potentiometer (P2), that the tapping of the second potentiometer (P2) ist connected to reference potential via a second capacitor (C2), and that the collector electrode of the third transistor (T3) ist connected to the collector electrode of the first transistor (T1), to the input terminals of the decision device elements (EE1, EE2) and via a second resistor (R2) to reference potential.

## Revendications

1. Régénérateur pour signaux numériques à réaction quantifiée pur la récupération des composantes de signaux, supprimées lors de la transmission des signaux numériques, comportant un circuit de décision (E), qui peut contenir outre un circuit de décision conservant l'amplitude, également un circuit de décision temporelle et dont la fréquence limite d'amplification correspond approximativement à la fréquence maximale des signaux, et comportant une liaison raccordant la sortie du circuit de décision à un premier circuit additionneur (S1) branché en amont du circuit de décision dans la voie de transmission des signaux, notamment pour des signaux numériques à plusieurs paliers, caractérisé par le fait qu'à une sortie du circuit de décision (E) se trouve raccordée la première entrée d'un second circuit additionneur (S2), dont la seconde entrée est raccordée à la sortie d'un étage à retard (VS) présentant un temps de retard correspond approximativement au temps de transit des signaux à travers le circuit de décision (E) et présentant une rotation de phase de 180°, et que l'entrée de l'étage de retardement (VS) est branchée en parallèle avec l'entrée du premier circuit additionneur (S1) pour les signaux devant être régénérés.

2. Régénérateur suivant la revendication 1, caractérisé par le fait qu'il est prévu comme étage à retard un étage amplificateur à transistors.

3. Régénérateur suivant la revendication 1 ou 2, caractérisé par le fait que pour la récupération de composantes de signaux basse fréquence, le premier circuit additionneur (S1) contient un amplificateur possédant une fréquence limite basse et qui est branché dans la voie de transmission des signaux couplés par réaction.

4. Régénérateur suivant les revendications 1 à 3, caractérisé par le fait que l'étage à retard (VS) ainsi que le premier et le second circuits additionneurs (S1, S2), sont réunis sous la forme d'un module unique.

5. Régénérateur suivant la revendication 1, caractérisé par le fait que pour la récupération de composantes basse fréquence d'un signal numérique à n paliers, à la borne d'entrée (E1) se trouve raccordée la borne de base d'un premier transistor (T1), dont la borne d'émetteur est reliée à la borne de base d'un second transistor (T2) et est reliée, par l'intermédiaire d'une première résistance (R1), à la tension de service (—Ub), que la borne d'émetteur du second transistor (T2) est reliée par l'intermédiaire d'un premier potentiomètre (P1) à la tension de service (—Ub) et que la borne du curseur du potentiomètre (P1) est reliée par l'intermédiaire d'un premier condensateur (C1) au potentiel de référence, et qu'il est prévu un nombre d'éléments (EE1, EE2) du circuit de décision, qui est réduit de l par rapport au nombre n des paliers d'amplitude, que les éléments du circuit de décision contiennent des amplificateurs différentiels respectifs situés du côté entrée et en aval desquels sont branchées des bascules bistables de type D commandées de façon cadencée et que la tension de référence ou le seuil de commutation de la bascule bistable de type D commandée de façon cadencée correspond à l'un des seuils du signal numérique devant être régénéré, que la borne de collecteur du second transistor (T2) et les bornes de collecteur des étages d'entrée des amplificateurs différentiels des éléments du circuit de décion sont reliées entre elles et, par l'intermédiaire d'une diode Zener (ZD), shuntée par un troisième condensateur (C3), à la borne de base d'un troisième transistor (D3) ainsi que, par l'intermédiaire d'une troisième résistance (R3), au potentiel de référence, que la borne de base et la borne d'émetteur du troisième transistor (T3) sont reliées respectivement par l'intermédiaire d'une quatrième résistance (R4) et d'un second potentiomètre (P2) à la tension de service (—Ub) et que la prise médiane du second potentiomètre (P2) est reliée par l'intermédiaire d'un second condensateur (P2) au potentiel de référence et que la borne de collecteur du troisième transistor (T3) est reliée à la borne de collecteur du premier transistor (T1), aux bornes d'entrée des éléments (EE1, EE2) du circuit de décision et, par l'intermédiaire d'une seconde résistance (R2), au potentiel de référence.

# FIG 1

# FIG 2